# EUROPÄISCHE PATENTSCHRIFT

(11) **EP 4 515 123 B1**
(45) Veröffentlichungstag und Bekanntmachung des Hinweises auf die Patenterteilung: **28.10.2026**
(21) Anmeldenummer: 23720761.8
(22) Anmeldetag: 24.04.2023
(51) Int. Cl.: F16H 57/08, F16C 35/02, F16C 33/10, F16H 57/04, F16C 17/04

(54) **PLANETENGETRIEBE MIT EINER VERDREHGESICHERTEN ANLAUFSCHEIBE DER PLANETENLAGERUNG**
PLANETARY GEARBOX HAVING A ROTATIONALLY FIXED THRUST WASHER OF THE PLANET BEARING
BOÎTE DE VITESSES À TRAINS ÉPICYCLOÏDAUX À RONDELLE DE BUTÉE FIXE EN ROTATION DU PALIER PLANÉTAIRE

(30) Priorität: 27.04.2022 DE 102022110183
(43) Veröffentlichungstag der Anmeldung: 05.03.2025
(73) Patentinhaber: Schaeffler Technologies AG & Co. KG, 91074 Herzogenaurach (DE)
(72) Erfinder: SCHOENSTEIN, Frank, 91083 Baiersdorf (DE); FUGEL, Wolfgang, 90453 Nürnberg (DE); KIRSCHNER, Andreas, 91086 Aurachtal (DE)
(74) Vertreter: Schaeffler Technologies
(86) Internationale Anmeldenummer: PCT/DE2023/100293
(87) Internationale Veröffentlichungsnummer: WO 2023/208280

(56) Entgegenhaltungen:
- WO-A1-2023/093939
- DE-A1- 102013 200 240
- US-A- 4 795 220
- US-A1- 2018 283 532

## Beschreibung

### Gebiet der Erfindung

Die Erfindung betrifft ein Planetengetriebe mit mehreren Planetenrädern, die jeweils rotierbar um einen an einem Planetenträger angeordneten Planetenzapfen gelagert sind, wobei auf dem jeweiligen Planetenzapfen axial zwischen mindestens einem Planetenrad und dem Planetenträger mindestens eine Anlaufscheibe verdrehgesichert angeordnet ist.

### Hintergrund der Erfindung

Ein derartiges Planetengetriebe ist aus der DE 40 09 968 A1 bekannt. Die hier offenbarte Anlaufscheibe ist als Axial-Gleitlager der Planetenlager für das jeweilige Planetenrad vorgesehen. Das Planetenrad ist dabei mittels des Planetenlagers radial auf einem Planetenbolzen drehgelagert. Die Anlaufscheibe sitzt jeweils axial zwischen dem Planetenlager, dem Planetenrad und dem Planetenträger. Über die Oberfläche der jeweiligen Anlaufscheibe wird eine Lagerfläche definiert, welche zumeist als Gleitlagerfläche ausgeführt ist. Die Gleitlagerfläche ist von Fall zu Fall anders ausgeführt. Die Anlaufscheiben sind mit sich nach radial außen laschenförmig erstreckenden Materialanformungen zur Verdrehsicherung versehen. Dadurch wird verhindert, dass sich die jeweilige Anlaufscheibe gegenüber dem Planetenträger verdreht und es wird einerseits Reibverschleiß in der Berührungszone zwischen der gehärteten Anlaufscheibe und dem zumeist nicht gehärteten Planetenträger vermieden. Andererseits werden nicht definierte Reib- oder Gleitzustände zwischen Anlaufscheibe und dem Planetenrad vermieden.

Aus der DE 10 2013 200 240 A1 geht ein gattungsgemäßes Planetengetriebe mit mehreren Planetenrädern, die rotierbar um je einen an einem Planetenträger angeordneten Planetenzapfen gelagert sind, hervor. Zwischen dem jeweiligen Planetenrad und dem Planetenträger ist als Axial-Gleitlager des jeweiligen Planetenlagers eine auf dem Planetenzapfen eine sitzende Anlaufscheibe angeordnet. Die Anlaufscheibe ist mit symmetrisch spiegelbildlich zu einer Hochachse ausgebildeten Flügelanformungen versehen, die auch einer die Hochachse rechtwinklig schneidenden Querachse spiegelbildlich symmetrisch ausgebildet sind. Die Flügel weisen abwinkelungsfrei in der Scheibenebene axial voneinander weg und greifen in eine axiale Vertiefung in dem Planetenträger ein. Anschlagfläche am Planetenträger zur Anlage kommt. Die Flügelanformungen der Anlaufscheibe sind derart symmetrisch ausgebildet, dass diese von einer trapezförmigen Hüllgeometrie einschließbar ist. Die jeweilige Vertiefung im Planetenträger weist Anschlagflächen auf, die so zueinander ausgerichtete sind, dass diese mit der Hüllgeometrie korrespondierende, also in einer Trapezform zueinander ausgerichtete, Innenflanken aufweist.

Ein weiteres Planetengetriebe der Gattung geht aus der US 2018 / 0 283 532 A1 hervor. In diesem Fall ist die Geometrie der Anlaufscheibe bezüglich der Flügelanformungen um die Hochachse spiegelbildlich identisch ausgeführt. Die Flügelanformungen schlagen mit voneinander abgewandten und mit der trapezförmigen Innengeometrie korrespondierenden Flanken an den ebenfalls eine Trapezform beschreibenden Innenflanken der axialen Vertiefung im Planetenträger an.

Aus der DE 10 2009 023 328 A1 geht ein Planetengetriebe hervor, in dem die Anlaufscheiben mit Flanken versehen sind, welche um die Hochachse spiegelbildlich identisch und parallel zueinander ausgerichtet sind. Jeweils eine der Flanken schlägt zwecks Verdrehsicherung an einer Anschlagfläche des Planetenträgers an, welche an einem tangentialen Hinterschnitt des Planetenträgers ausgebildet ist.

Aus der US 2019 / 0 308 351 A1 geht eine flache Anlaufscheibe hervor, die an beiden Scheibenseiten mehrere innen- und außenradial randoffene Vertiefungsbereiche zur Schmiermittelversorgung einer Planetenlagerung aufweist.

### Beschreibung der Erfindung

Es ist die Aufgabe der Erfindung ein Planetengetriebe der gattungsgemäßen Art dahingehend weiter zu verbessern, dass die hierbei zum Einsatz kommenden Anlaufscheiben der Planetenräder mit einer Verdrehsicherung ausgestattet sind, welche platzsparend an die Form des korrespondierenden Planetenträgers angepasst sowie verbiegungssicher ausgebildet ist.

Die Aufgabe wird ausgehend von einem Planetengetriebe gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Anlaufscheibe des Planetengetriebes weist zur Verdrehsicherung mindestens eine von einem unteren Umfangskreisabschnitt ausgehend und abwinkelungsfrei in Tangentialrichtung nach außen verlaufende Flügelanformungen auf, welche formschlüssig an einer korrespondierenden Anschlagfläche am Planetenträger zur Anlage kommt und dabei erfindungsgemäß die Anlaufscheibe an beiden Scheibenseiten mehrere innen- und außenradial randoffene Erhebungsbereiche und hierzu benachbarte Vertiefungsbereiche zur Schmiermittelversorgung der Planetenlagerung aufweist.

Der Vorteil der erfindungsgemäßen Lösung liegt insbesondere darin, dass auf sich in axiale Richtung rechtwinklig oder in beliebigen anderen Winkel abgeknickte/abgewinkelte Laschenabschnitte an der Anlaufscheibe verzichtet wird, wodurch die gesamte Anlaufscheibe als im Wesentlichen flach ausgestrecktes Bauteil ausgeführt ist und sich einfacher herstellen lässt. Die Flügelanformungen verlaufen in einer Radialebene, in welcher auch die Anlaufscheibe bzw. deren Grundform ausgerichtet verläuft, also abwinkelungsfrei. Die erfindungsgemäßen flügelartigen Anformungen sind abwinkelungsfrei an die kreisringscheibenartige Grundform der Anlaufscheibe angepasst und daher stabiler. Dies bildet zudem die Voraussetzung dafür, dass sich die spezielle Flügelanformung platzsparend an eine bolzennahe korrespondierende Anlagefläche des Planetenträgers anpassen lassen. Vorzugsweise passt die erfindungsgemäße Anlaufscheibe mit Flügelanformung formschlüssig in eine korrespondierende Tasche des Planetenträgers und stützt sich dabei an den Verbindungsstegen und nicht wie üblich an den Trägerwangen desselben ab. Hierdurch kann die erfindungsgemäße Anlaufscheibe in Radialrichtung relativ kurzbauend ausgeführt werden.

Gemäß einer bevorzugten Ausführungsform wird vorgeschlagen, dass die Anlaufscheibe zwei spiegelsymmetrisch zu einer Radiallinie R angeordnete, allmählich aus der kreisförmigen Grundform der Anlaufscheibe hervorgehende Flügelanformungen aufweist, deren seitlichen Tangentialabschnitte eine V-Form ergeben. Die Anlaufscheibe mit den Flügelanformungen ist vorzugsweise symmetrisch ausgebildet, so dass diese von einer trapezförmigen Hüllgeometrie H einschließbar ist. Aus dieser Symmetrie resultiert eine beidseitige Verdrehsicherung für die montierte Anlaufscheibe.

Innerhalb der besagten trapezförmigen Hüllgeometrie münden die beiden seitlichen Tangentialabschnitte der V-Form vorzugsweise jeweils in einen oberen Dachbogen ein, dessen Krümmungsradius viel größer ist als der Radius des unteren Umfangskreisabschnitts. Zwischen den vorzugsweise geraden seitlichen Tangentialabschnitten und dem diese verbindenden gekrümmten Dachbogen kann ferner ein Übergangsradiusabschnitt ausgebildet sein, um spitze Ecken am Bauteil zu vermeiden.

Mit einer Ausgestaltung der Erfindung ist vorgesehen, dass die Erhebungsbereiche an einer ersten Scheibenseite jeweils mit einer Anlauffläche für den axialen Anlauf eines Planetenrads und and einer von der ersten Scheibenseite abgewandten Scheibenseite mit einer Kontaktfläche für den Kontakt mit dem Planetenträger versehen ist. Die Anlauffläche bildet die Gleitfläche des Axial-Gleitlagers, an welcher das rotierende Planetenrad gleitend anläuft. Die Kontaktfläche ist axial an dem Planetenträger direkt oder über eine weitere Scheibe abgestützt, jedoch aufgrund der Verdrehsicherung der Anlaufscheibe relativ zum Planetenträger unbeweglich.

Gemäß einer die Erfindung weiter verbessernden Maßnahme wird vorgeschlagen, dass die Anlaufscheibe einen profilierten zentralen Durchbruch aufweist, der zur Verdrehsicherung gegenüber dem Planetenzapfen in Formschluss mit einem hierzu korrespondierenden Abschnitt desselben steht.

Gemäß einer weiteren Ausgestaltung der Erfindung ist vorgesehen, dass die Anlaufscheibe einen zentralen Durchbruch mit randseitig des Durchbruchs ausgeklinkten Ausklinkungen oder Verformungen aufweist, der in Wirkverbindung mit einem hierzu korrespondierenden Abschnitt des Planetenzapfens Schmiermitteldurchbrüche bilden. Durch die Schmiermitteldurchbrüche ist abgesichert, dass Schmiermittel zwischen den beiden Scheibenseiten ausgetauscht werden kann. Die Ausklinkungen werden beim Stanzen der Scheibe erzeugt. Die Verformungen sind durch den axialen und radialen Versatz der Vertiefungsbereiche zum Erhöhungsbereiche gebildet, der durch das Durchstellen der Vertiefungsbereiche beim Prägen der Anlaufscheibe entsteht.

Die erfindungsgemäße Anlaufscheibe ist vorzugsweise als Stanzbiegeteil aus einem Metallblech hergestellt. Hierdurch lässt sich in fertigungstechnisch einfacher Weise eine qualitätskonstante Massenfertigung gewährleisten.

Eine Ausgestaltung der Erfindung sieht vor, dass die Erhebungsbereiche und die Vertiefungsbereiche der aus einem Metallblech hergestellten Anlaufscheibe an einer Scheibenkröpfung axial ineinander übergehen und dass die Erhebungsbereiche und die Vertiefungsbereiche miteinander verglichen eine gleiche Blechdicke aufweisen. Die Scheibenkröpfung gleicht die axiale Differenz zwischen den Erhöhungs- und Vertiefungsbereichen aus. Daraus ergibt sich, dass die axiale Scheibendicke Anlaufscheibe größer ist als die Dicke der Anlaufscheibe in den Vertiefungs- und Erhöhungsbereichen.

Wie bereits vorstehend beschrieben ist, wird vorgeschlagen, dass die Anlaufscheibe an beiden Scheibenseiten mehrere innen- und außenradial randoffene Erhebungsbereiche und hierzu benachbarte Vertiefungsbereiche zur Schmiermittelversorgung der Planetenlagerung aufweist. Denn die Vertiefungsbereiche der jeweiligen Seite bilden im Zusammenwirken mit dem angrenzenden Bauteil in Radialrichtung verlaufende Schmiermittelkanäle. Gewöhnlich sollen die Planetenlager auch radial von außen beschmiert werden können. Da während des Betriebs Fliehkräfte auftreten, muss der Eingang der Auffangöffnung in der Scheibe so groß wie möglich sein. Bei der erfindungsgemäßen Anlaufscheibe wird dies in vorteilhafter Weise dadurch realisiert, dass zumindest einer der Vertiefungsbereiche teilweise bis vollständig über mindestens eine der Flügelanformungen verläuft, um nach radial außen hin eine maximal große Einlauföffnung für Schmiermittel zu bilden. Dies gewährleistet ein relativ größeres Schöpfvolumen an Schmiermittel.

Hiermit lässt sich das Planetenlager der Planetenräder hinreichend mit Schmiermittel versorgen, welches vorzugsweise als Nadellager ausgebildet werden kann.

### Beschreibung der Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine teilperspektivische Ansicht eines Planetengetriebes im Bereich eines exemplarischen Planetenrades,
- Fig. 2: die teilperspektivische Ansicht gemäß Fig. 1 in Explosionsdarstellung,
- Fig. 3: eine Draufsicht auf eine im Planetenträger montierte erfindungsgemäße Anlaufscheibe, ohne Planetenradbauteile,
- Fig. 4: eine Draufsicht auf die Anlaufscheibe als Einzelbauteil,
- Fig. 5: die Anlaufscheibe im Längsschnitt entlang der Linie A - A in Figur 4 und
- Fig. 6: die Anlaufscheibe im Längsschnitt entlang der Linie B - B in Figur 4

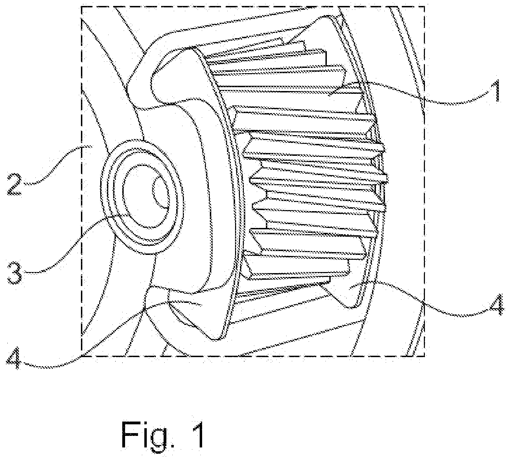

Gemäß Fig. 1 besteht das Planetengetriebe aus mehreren Planetenrädern 1 (exemplarisch), welche rotierbar um je einen an einem Planetenträger 2 angeordneten Planetenzapfen 3 gelagert sind. Beidseitig axial zwischen dem Planetenrad 1 und dem Planetenträger 2 ist eine vereinfacht dargestellte Anlaufscheibe 4 auf dem Planetenzapfen 3 verdrehgesichert angeordnet.

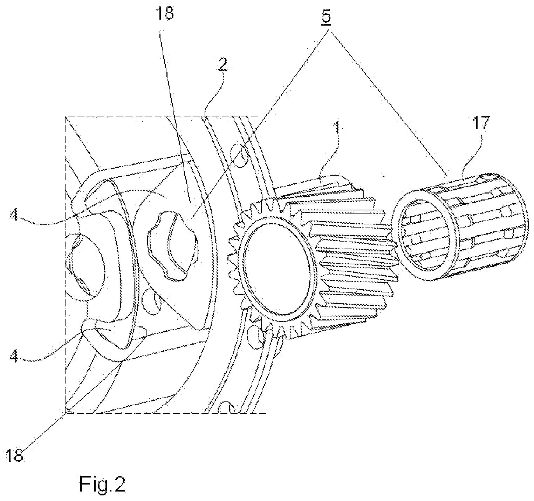

Gemäß Fig. 2 ist das Planetenrad 1 über ein Planetenlager 5 an einem Planetenzapfen (hier nicht dargestellt) drehgelagert. Das Planetenlager 5 ist aus einem als Nadellager ausgebildeten Radiallager 17 und aus einem durch die Anlaufscheibe 4 bereitgestellten Axial-Gleitlager 18 gebildet. Für das Planetenlager 5 entsteht ein Schmiermittelbedarf, der über die in dieser Darstellung vereinfacht dargestellten Anlaufscheiben 4 in nachfolgend beschriebener Weise sichergestellt wird.

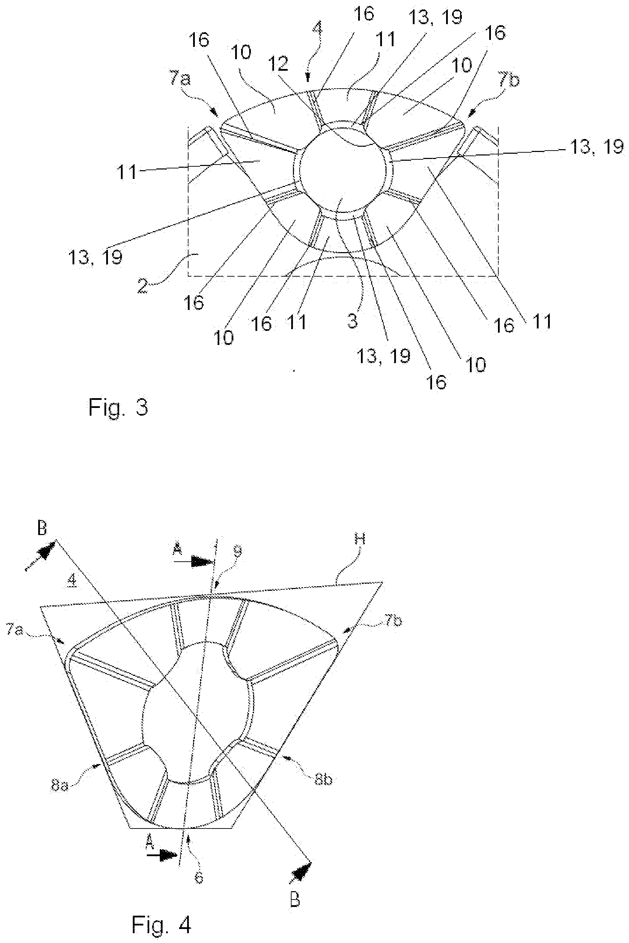

Nach Fig. 3 weist die exemplarische Anlaufscheibe 4 oberflächlich mehrere innen- und außenradial randoffene Erhebungsbereiche 10 und hierzu im Wechsel benachbarte Vertiefungsbereiche 11 (exemplarisch) zur Schmiermittelversorgung der Planetenlagerung auf. Einer der Vertiefungsbereiche 11 verläuft dabei vollständig über eine der beiden Flügelanformungen 7a, um nach außen hin eine maximal große Einlauföffnung für das Schmiermittel zu bilden. Die Erhebungsbereiche 10 und die Vertiefungsbereiche 11 der aus einem Metallblech hergestellten Anlaufscheibe 4 gehen an einer Scheibenkröpfung 16 axial ineinander über.

Ferner weist die Anlaufscheibe 4 die Anlaufscheibe 4 einen zentralen Durchbruch 12 mit randseitig des Durchbruchs 12 ausgebildeten Verformungen 19 oder Ausklinkungen bzw. eine Kombination dieser auf, welche in Wirkverbindung mit einem hierzu korrespondierenden Abschnitt des Planetenzapfens 3 axiale Schmiermitteldurchbrüche 13 bilden.

Hinsichtlich Fig. 4 ist die exemplarische Anlaufscheibe 4 derart gestaltet, dass diese zwei spiegelsymmetrisch von einem unteren Umfangskreisabschnitt 6 ausgehend und abwinkelungsfrei in Tangentialrichtung nach außen verlaufende Flügelanformungen 7a und 7b aufweist. Diese beiden Flügelanformungen 7a und 7b dienen - wie bereits vorstehend erläutert - einer formschlüssigen Verbindung mit einer korrespondierenden Anschlagfläche am - hier nicht weiter dargestellten - Planetenträger 2. Die Spiegelsymmetrie besteht relativ zu einer Radiallinie R, welche vom Achsmittelpunkt des Planetengetriebes ausgehend sich nach radial außen erstreckt.

Die geradlinigen seitlichen Tangentialabschnitte 8a und 8b der Flügelanformungen 7a bzw. 7b ergeben einer V-Form mit einem spitzen Winkel. Die beiden seitlichen Tangentialabschnitte 8a und 8b münden jeweils in einen oberen Dachbogen 9 ein, dessen Krümmungsradius viel größer ist als der Radius des unteren Umfangskreisabschnitts 6, welcher aus der Ringscheiben-Grundform der Anlaufscheibe 4 resultiert.

Die exemplarische Anlaufscheibe 4 ist mit den Flügelanformungen 7a und 7b derart symmetrisch ausgebildet, dass diese von einer trapezförmigen Hüllgeometrie H einschließbar ist.

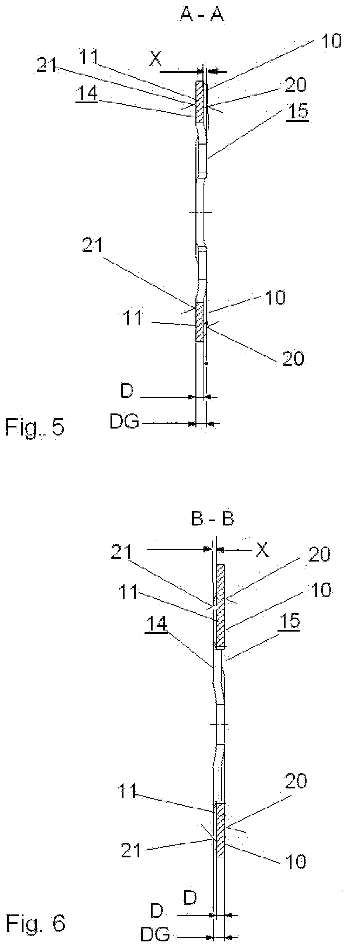

Aus den Figuren 5 und 6 geht hervor, dass die Erhebungsbereiche 10 und die Vertiefungsbereiche 11 der aus einem Metallblech hergestellten Anlaufscheibe 4 an einer Scheibenkröpfung 16 axial ineinander übergehen. Die gesamte Scheibendicke DG setzt sich aus der Blechdicke D und der axialen Differenz X zwischen dem Erhebungs- und Vertiefungsbereich zusammen. Die Erhebungsbereiche 10 und die Vertiefungsbereiche 11 weisen miteinander verglichen eine gleiche Blechdicke D auf. An den Erhebungsbereichen 10 der ersten Scheibenseite 14 sind Anlaufflächen 20 des Axial-Gleitlagers 18 ausgebildet. An den Vertiefungsbereichen 11 der zweiten Scheibenseite 15 sind Kontaktflächen 21 für den Kontakt mit dem in den Figuren 1 und 2 abgebildeten Planetenträger ausgebildet. Die Vertiefungsbereiche 11 sind jeweils an der Rückseite der Kontaktflächen 21 und der Anlaufflächen 20 ausgebildet. An jeder Vertiefung 11 ist rückseitig eine Kontaktfläche 21 ausgebildet.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, lediglich eine der Flügelanformungen an einer Anlaufscheibe zur Verdrehsicherung anzubringen. Dies schränkt allerdings die Laufrichtung des Planetengetriebes ein.

### Bezugszeichenliste

- 1: Planetenrad
- 2: Planetenträger
- 3: Planetenzapfen
- 4: Anlaufscheibe
- 5: Planetenlager
- 6: Umfangskreisabschnitt
- 7: Flügelanformung
- 8: Tangentialabschnitt
- 9: Dachbogen
- 10: Erhebungsbereich
- 11: Vertiefungsbereich
- 12: Durchbruch
- 13: Schmiermitteldurchbruch
- 14: erste Scheibenseite
- 15: zweite Scheibenseite
- 16: Scheibenkröpfung
- 17: Radiallager
- 18: Axial-Gleitlager
- 19: Verformung
- 20: Anlaufflächen
- 21: Kontaktfläche
- D: Dicke des Bleches
- DG: Gesamtdicke der Anlaufscheibe
- X: Differenz
- H: Hüllgeometrie
- R: Radiallinie

## Patentansprüche

1. Planetengetriebe mit mehreren Planetenrädern (1), die jeweils mittels eines Planetenlagers (5) rotierbar um je einen an einem Planetenträger (2) angeordneten Planetenzapfen (3) gelagert sind, wobei axial zwischen mindestens einem Planetenrad (1) und dem Planetenträger (2) auf dem Planetenzapfen (3) mindestens eine am Planetenträger (2) verdrehgesicherte Anlaufscheibe (4) des Planetenlagers als Axial-Gleitlager mit zwei voneinander abgewandten Scheibenseiten (14, 15) angeordnet ist, wobei die Anlaufscheibe (4) zur Verdrehsicherung mindestens eine von einem unteren Umfangskreisabschnitt (6) ausgehend und abwinkelungsfrei in Tangentialrichtung nach außen verlaufende Flügelanformung (7a; 7b) aufweist, die formschlüssig an einer korrespondierenden Anschlagfläche am Planetenträger (2) zur Anlage kommt, und wobei die Anlaufscheibe (4) an beiden Scheibenseiten (14, 15) mehrere innen- und außenradial randoffene Vertiefungsbereiche (11) zur Schmiermittelversorgung der Planetenlagerung aufweist, **dadurch gekennzeichnet, dass** die Anlaufscheibe (4) an beiden Scheibenseiten (14, 15) jeweils mehrere innen- und außenradial randoffene und zu den Vertiefungsbereichen (11) benachbarte Erhebungsbereiche (10) aufweist.

2. Planetengetriebe nach Anspruch 1,
**dadurch gekennzeichnet, dass** die Anlaufscheibe (4) zwei spiegelsymmetrisch zu einer Radiallinie (R) angeordnete Flügelanformungen (7a, 7b) aufweist, deren seitlichen Tangentialabschnitte (8a, 8b) eine V-Form ergeben.

3. Planetengetriebe nach Anspruch 2,
**dadurch gekennzeichnet, dass** die Anlaufscheibe (4) mit den Flügelanformungen (7a, 7b) derart symmetrisch ausgebildet ist, dass diese von einer trapezförmigen Hüllgeometrie (H) einschließbar ist.

4. Planetengetriebe nach Anspruch 2 oder 3,
**dadurch gekennzeichnet, dass** die beiden seitlichen Tangentialabschnitte (8a, 8b) jeweils in einen oberen Dachbogen (9) einmünden, dessen Krümmungsradius größer ist als der Radius des unteren Umfangskreisabschnitts (6).

5. Planetengetriebe nach Anspruch 4,
**dadurch gekennzeichnet, dass** zwischen den seitlichen Tangentialabschnitten (8a, 8b) und dem diese verbindenden Dachbogen (9) ein Übergangsradius ausgebildet ist.

6. Planetengetriebe nach Anspruch 1 oder 2, **dadurch gekennzeichnet, dass** die Erhebungsbereiche (10) an einer ersten Scheibenseite (14) der Scheibenseiten (14, 15) jeweils mit einer Anlauffläche (20) für den axialen Anlauf eines Planetenrads (1) und an einer axial von der ersten Scheibenseite (14) abgewandten zweiten Scheibenseite (15) der Scheibenseiten (14, 15) mit einer Kontaktfläche (16) für den Kontakt mit dem Planetenträger (2) versehen ist.

7. Planetengetriebe nach einem der vorstehenden Ansprüche,
**dadurch gekennzeichnet, dass** die Anlaufscheibe (4) einen zentralen Durchbruch (12) mit randseitig des Durchbruchs (12) ausgebildeten Verformungen (19) aufweist, welche in Wirkverbindung mit einem hierzu korrespondierenden Abschnitt des Planetenzapfens (3) axiale Schmiermitteldurchbrüche (13) bilden.

8. Planetengetriebe nach einem der vorstehenden Ansprüche,
**dadurch gekennzeichnet, dass** die Anlaufscheibe (4) als Stanzbiegeteil aus einem Metallblech hergestellt ist.

9. Planetengetriebe nach Anspruch 1 oder 8, **dadurch gekennzeichnet, dass** die Erhebungsbereiche (10) und die Vertiefungsbereiche (11) der aus einem Metallblech hergestellten Anlaufscheibe (4) an einer Scheibenkröpfung (16) axial ineinander übergehen und dass die Erhebungsbereiche (10) und die Vertiefungsbereiche (11) miteinander verglichen eine gleiche Blechdicke (D) aufweisen.

10. Planetengetriebe nach Anspruch 1,
**dadurch gekennzeichnet, dass** zumindest einer der Vertiefungsbereiche (11) zumindest teilweise bis vollständig über mindestens eine der Flügelanformungen (7a; 7b) verläuft, um nach außen hin eine maximal große Einlauföffnung für Schmiermittel zu bilden.

## Claims

1. A planetary gearbox having a plurality of planet gears (1) which are each mounted rotatably by means of a planet bearing (5) about a respective planet pin (3) arranged on a planet carrier (2), wherein at least one thrust washer (4) of the planet bearing, which thrust washer is rotationally fixed on the planet carrier (2), is arranged axially between at least one planet gear (1) and the planet carrier (2), on the planet pin (3), as an axial plain bearing having two washer sides (14, 15) facing away from one another, wherein, for rotational fixing, the thrust washer (4) has at least one wing formation (7a; 7b) which extends from a lower circumferential circle portion (6) outwards in the tangential direction without a bend and which comes to bear in a form-fitting manner against a corresponding stop face on the planet carrier (2), and wherein the thrust washer (4) has, on both washer sides (14, 15), a plurality of recessed regions (11) which are open at the edge radially inwards and radially outwards, for supplying lubricant to the planet bearing, **characterized in that** the thrust washer (4) has, on both washer sides (14, 15), in each case a plurality of raised regions (10) which are open at the edge radially inwards and radially outwards and which are adjacent to the recessed regions (11).

2. The planetary gearbox according to claim 1,
**characterized in that** the thrust washer (4) has two wing formations (7a, 7b) which are arranged mirror-symmetrically with respect to a radial line (R), and the lateral tangential portions (8a, 8b) of which form a V shape.

3. The planetary gearbox according to claim 2,
**characterized in that** the thrust washer (4) with the wing formations (7a, 7b) is formed symmetrically such that it can be enclosed by a trapezoidal envelope geometry (H).

4. The planetary gearbox according to claim 2 or 3,
**characterized in that** the two lateral tangential portions (8a, 8b) each open into an upper roof arch (9), the radius of curvature of which is greater than the radius of the lower circumferential circle portion (6).

5. The planetary gearbox according to claim 4,
**characterized in that** a transition radius is formed between the lateral tangential portions (8a, 8b) and the roof arch (9) connecting them.

6. The planetary gearbox according to claim 1 or 2, **characterized in that** the raised regions (10) are each provided, on a first washer side (14) of the washer sides (14, 15), with a thrust face (20) for the axial thrust of a planet gear (1) and, on a second washer side (15) of the washer sides (14, 15) which faces axially away from the first washer side (14), with a contact face (16) for contact with the planet carrier (2).

7. The planetary gearbox according to any one of the preceding claims,
**characterized in that** the thrust washer (4) has a central aperture (12) with deformations (19) formed at the edge of the aperture (12), which deformations, in operative connection with a portion of the planet pin (3) corresponding thereto, form axial lubricant apertures (13).

8. The planetary gearbox according to any one of the preceding claims,
**characterized in that** the thrust washer (4) is produced as a stamped and bent part from a metal sheet.

9. The planetary gearbox according to claim 1 or 8, **characterized in that** the raised regions (10) and the recessed regions (11) of the thrust washer (4) produced from a metal sheet merge axially into one another at a washer offset (16) and **in that** the raised regions (10) and the recessed regions (11) have the same sheet thickness (D) in comparison with one another.

10. The planetary gearbox according to claim 1,
**characterized in that** at least one of the recessed regions (11) extends at least partially to completely over at least one of the wing formations (7a; 7b) in order to form, towards the outside, a maximally large inlet opening for lubricant.

## Revendications

1. Boîte de vitesses à trains épicycloïdaux comportant plusieurs roues planétaires (1), qui sont respectivement montées en rotation au moyen un palier planétaire (5) autour d'un tourillon planétaire (3) agencé sur un support planétaire (2), dans laquelle au moins une rondelle de butée (4) du palier planétaire fixe en rotation sur le support planétaire (2) est agencée axialement entre au moins une roue planétaire (1) et le support planétaire (2) sur le tourillon planétaire (3) en guise de palier lisse axial comportant deux côtés de rondelle (14, 15) mutuellement opposés, dans laquelle la rondelle de butée (4) présente, pour la fixation en rotation d'au moins un ergot de détrompage (7a ; 7b) partant d'une section circulaire périphérique inférieure (6) et s'étendant et sans coude dans la direction tangentielle vers l'extérieur, qui vient en appui par complémentarité de forme sur une surface d'arrêt sur le support planétaire (2), et dans laquelle la rondelle de butée (4) présente sur les deux côtés de rondelle (14, 15) plusieurs zones en creux (11) ouvertes sur le bord radial interne et externe pour l'alimentation en lubrifiant du palier planétaire, **caractérisée en ce que** la rondelle de butée (4) présente sur les deux côtés de rondelle (14, 15) respectivement plusieurs zones en élévation (10) ouvertes sur le bord radial interne et externe et adjacentes aux zones en creux (11).

2. Boîte de vitesses à trains épicycloïdaux selon la revendication 1,
**caractérisée en ce que** la rondelle de butée (4) présente deux ergots de détrompage (7a, 7b) agencés de manière symétrique en miroir par rapport à une ligne radiale (R), ergots dont les sections tangentielles latérales (8a, 8b) produisent une forme en V.

3. Boîte de vitesses à trains épicycloïdaux selon la revendication 2,
**caractérisée en ce que** la rondelle de butée (4) comportant les ergots de détrompage (7a, 7b) est réalisée de manière symétrique de telle sorte que celle-ci peut être inscrite dans une géométrique de coque (H) de forme trapézoïdale.

4. Boîte de vitesses à trains épicycloïdaux selon la revendication 2 ou 3,
**caractérisée en ce que** les deux sections tangentielles latérales (8a, 8b) débouchent respectivement dans un arc de carter supérieur (9), dont le rayon de courbure est supérieur au rayon de la section circulaire périphérique inférieure (6).

5. Boîte de vitesses à trains épicycloïdaux selon la revendication 4,
**caractérisée en ce que**, entre les sections tangentielles latérales (8a, 8b) et l'arc de carter (9) relié à celles-ci se forme un rayon de transition.

6. Boîte de vitesses à trains épicycloïdaux selon la revendication 1 ou 2 **caractérisée en ce que** la zone en élévation (10) sur un premier côté de rondelle (14) des côtés de rondelle (14, 15) est pourvue d'une surface de butée (20) pour la butée axiale de la roue planétaire (1) et sur un second côté de rondelle (15) des côtés de rondelle (14, 15) axialement à l'opposé du premier côté de rondelle (14), est pourvue d'une surface de contact (16) pour le contact avec le support planétaire (2) respectivement.

7. Boîte de vitesses à trains épicycloïdaux selon l'une quelconque des revendications précédentes,
**caractérisée en ce que** la rondelle de butée (4) présente un passage traversant central (12) comportant des déformations (19) réalisées côté bord du passage traversant (12), qui forment en liaison active avec une section qui leur correspond du tourillon planétaire (3) des passages traversants de lubrifiant axiaux (13).

8. Boîte de vitesses à trains épicycloïdaux selon l'une quelconque des revendications précédentes,
**caractérisée en ce que** la rondelle de butée (4) est fabriquée comme pièce découpée et pliée à partir d'une tôle métallique.

9. Boîte de vitesses à trains épicycloïdaux selon la revendication 1 ou 8, **caractérisée en ce que** la zone en élévation (10) et la zone en creux (11) de la rondelle de butée (4) fabriquée à partir d'une tôle métallique se raccordent axialement l'une à l'autre au niveau d'un coude de rondelle (16) et **en ce que** la zone en élévation (10) et la zone en creux (11) présente une épaisseur de tôle (D) identique lorsqu'elles sont comparées entre elles.

10. Boîte de vitesses à trains épicycloïdaux selon la revendication 1,
**caractérisée en ce qu'**au moins une des zones en creux (11) s'étend au moins partiellement jusqu'à totalement sur au moins l'un des ergots de détrompage (7a ; 7b), afin de former vers l'extérieur une grande ouverture d'entrée maximale pour le lubrifiant.
